Europäisches Patentamt

European Patent Office

Office européen des brevets

(11) Publication number: 0 296 282
A1

# EUROPEAN PATENT APPLICATION

(21) Application number: 87305515.6

(22) Date of filing: 22.06.87

(51) Int. Cl.⁴ F16L 37/28 , F17C 13/04

(43) Date of publication of application:
28.12.88 Bulletin 88/52

(84) Designated Contracting States:
DE GB IT

(71) Applicant: Mhatre, Harischandra Kesrinath
503 Debonair 153/B Veer Savarkar Marg
Mahim Bombay 400,016 Maharashtra(IN)

Applicant: Mhatre, Kanchan Harischandra
503 Debonair 153/B Veer Savarkar Marg
Mahim Bombay 400,016 Maharashtra(IN)

(72) Inventor: Mhatre, Harischandra Kesrinath
503 Debonair 153/B Veer Savarkar Marg
Mahim Bombay 400,016 Maharashtra(IN)
Inventor: Mhatre, Kanchan Harischandra
503 Debonair 153/B Veer Savarkar Marg
Mahim Bombay 400,016 Maharashtra(IN)

(74) Representative: Ruffles, Graham Keith et al
MARKS & CLERK 57-60 Lincoln's Inn Fields
London WC2A 3LS(GB)

(54) A gas pressure regulator with inter-lockable latching means.

(57) A gas pressure regulator with inter-lockable latching means comprising housing (1) having socket (2) with self-latching double hooks (4-5) hinged on independent pivots (6-7) and kept in normally closed position by ring-skirt (8) having compression spring (9) around socket (2) which automatically grips flange (10) of self-closing valve of gas cylinder, when adapted to couple, and inter-locks with gas flow controlling shaft (17) on housing (1); when ring-skirt (8) unseated manually pushing hooks (4-5) outwards to unlatch flange (10); an auxiliary rubber ring (23) in socket (2) remains pressed against flange (10) top when latched, self-aligning itself and forming additional seal; and an eccentric spindle (18) on shaft (17) engages into groove (19) of plunger (15) forming positive linkage to reciprocoate plunger (15) inside stub tube (13) to actuate pin (60) of the valve, its stem having 'O' ring (21) seal to stop entry of gas into regulator in desired position knob (36) which rotates shaft (17) in either direction to have maximum movement of plunger (15).

FIGURE - 1

## A gas pressure regulator with inter-lockable latching means

This invention relates to a gas pressure regulator with inter-locking latching means.

More particularly this invention relates to an inter-lockable means for gas pressure regulator inlet or that of high pressure connector of a manifold gas supply system, which automatically grips flange of a discharge outlet of a L. P. Gas cylinder valve when adapted to couple, it and gets inter-locked thereto when shaft thereof is rotated by its knob about its axis to make gas flow "ON" therethrough, and un-latching can be achieved manually in gas flow "OFF" condition; and wherein the knob rotates in either direction for making gas flow "ON" to "OFF" and vice a versa to eliminate confusion of gas user which results in breakage of knob, and to have maximum plunger movement for safe and full utilization of gas from the cylinder; and wherein an auxiliary rubber ring is provided in socket of regulator which remains pressed against flange top face of discharge outlet under latching pressure exerted by hook-latches from bottom of the flange resulting self-aligning itself, and forming additional rubber seal to prevent accidental leakage of gas; and wherein an eccentric spindle on the shaft engages into a groove across axis of a plunger making positive linkage and reciprocating movement of the plunger inside inlet stub tube, the plunger being provided with 'O' ring seal to stop entry of gas into the regulator in desired knob rotary position, and to provide additional protection against mal-functioning, if any, of the self-closing valve.

The gas pressure regulators with locking mechanism are known in prior art portion of Claim 1,(U. K. Patent No. 1 214 029 corresponding Indian Patent No. 118493) which provides a locking means for regulator to lock manually to outlet flange of self-closing valve of L. P. Gas cylinder, wherein the locking means comprises of a single hook adapted to clamp the flange only on one side resulting in imbalanced locking or unequal seating of regulator socket on discharge outlet of a gas cylinder valve, which causes tilting of regulator under gas pressure, and which gets aggravated after some use since hook locking means as well as internal diameter of clamping socket of regulator get worn out resulting in excessive tilting of the regulator, and which can cause leakage of gas under pressure due to unequal squeezing of rubber joint seal on discharge spout of gas cylinder, causing fire hazards. The single hook pivotted on the gas flow controlling shaft radially, causes damage to double 'O' ring seal provided on the same shaft, in use. The knob on shaft of gas regulator is rotatable through 90 degree in one direction only for making "ON" to "OFF". This often causes confusion at user end resulting wrong application of pressure or force to rotate the knob in wrong direction which damages it permanently. Due to the 90 degree rotation of knob, the plunger has smaller movement for actuating spring loaded protruded pin of the self-closing valve. This is undesirable when the pin protrudes more at a higher cylinder pressures corresponding to higher ambient temperatures and as well as undesirable for full utilization of gas from the cylinder at lower ambient temperatures. Further, when the knob is rotated in the same direction by 90 degree more unintentionally, perhaps in hurry, the regulator gets in detachable and loose condition and may fall, if there is a movement of the gas cylinder, causing serious damage to it.

The advantages offered by the invention are mainly that it provides an improved gas pressure regulator with inter-lockable latching means in which the drawbacks in prior art locking and operating mechanism are remedied by providing a positive double-hook self-latching means in which hooks are pivotted independently on toggle principle to relieve its pressure on the shaft, the latching operation and rotary operation of gas flow controlling shaft are independent but are inter-locked in desired sequence with rotation by shaft by a knob for the safety of gas user. The latching hooks are kept normally in closed position by a compression spring within a ring-skirt provided around socket for quick and firm gripping a flange of self-closing valve automatically when adapted to secure it, and continue to hold firmly in "OFF" cum "DETACHABLE" position. Un-latching is achieved by lifting or un-seating the ring-skirt manually and that too is possible in "OFF" position only of gas flow, when it is needed to be DETACHED or DISMOUNTED. In "ON" position of the gas flow, the ring-skirt cannot be lifted or unseated manually making the regulator to "DETACH" or "DISMOUNT" impossible, thus confirming inter-locking between the gas flow and UNDETACHABLE or UNDISMOUNTABLE condition of the regulator and vice a versa. Idle travel is provided in manually lifting of the ring-skirt to avoid inadvertant unlatching.

Another advantage offered by the invention is that it provides an auxiliary rubber ring in socket of regulator, which remains pressed against flange top face of discharge outlet under pressure of hooks of latching means from the bottom of the flange resulting self-alignment of the regulator and forming additional rubber seal to prevent accidental leakage of gas under pressure.

Further advantage offered by the invention is that an eccentric spindle formed on the shaft at inner end, engages into a groove formed across axis of the plunger at its inner end, making a positive linkage between them and reciprocating movement of the plunger inside inlet stub tube, the plunger being suitably provided with a circular groove with 'O' ring seal to stop gas flow into the regulator in desired rotary position of the knob, and giving additional protection against mal-functioning, if any, of the self-closing valve, in service.

One way of carrying out the invention is described in detail below with reference to accompanying drawings which illustrate only specific embodiments of the present invention, in which:

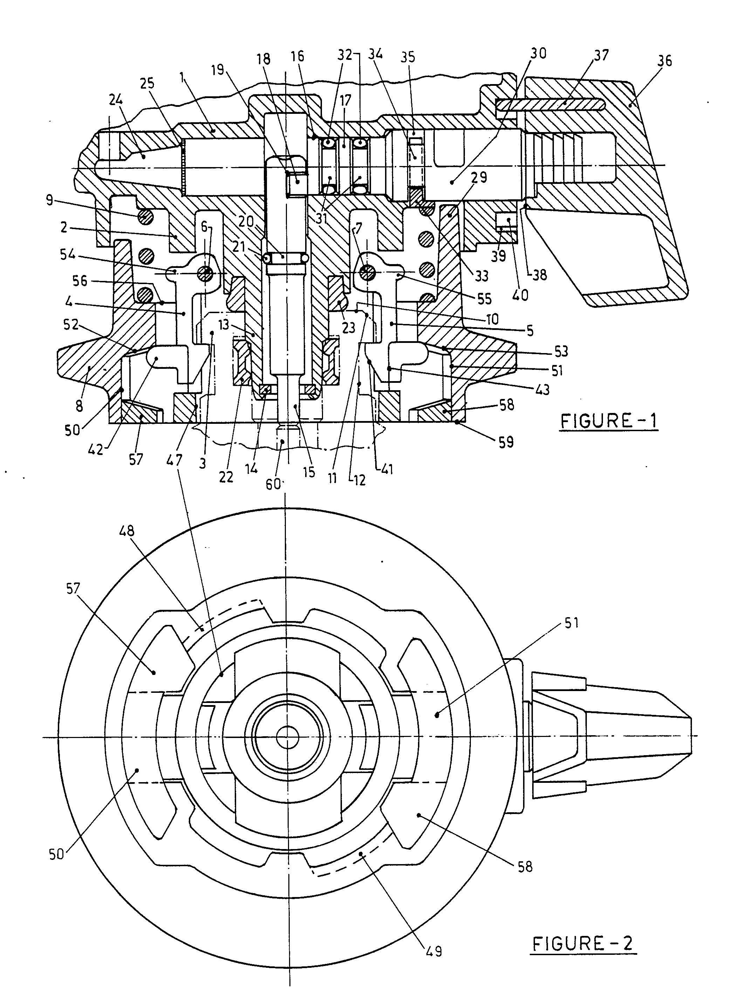

Figure 1, is a sectional view of a gas pressure regulator inlet with inter-lockable latching means wherein the housing is clamped by two hooks pivotally mounted latches, to discharge spout of a gas cylinder valve, when knob on the shaft is turned axially to "LOCK"/UNDETACHABLE position locking the latches, and the knob pointing upwards in direction of gas flow, wherein plunger depresses pin in the valve to allow gas under pressure to flow "ON" therethrough to inlet of gas regulator.

Figure 2 is a bottom view of the Figure 1 without discharge spout, showing position of inserts in the ring-skirt from the bottom, and

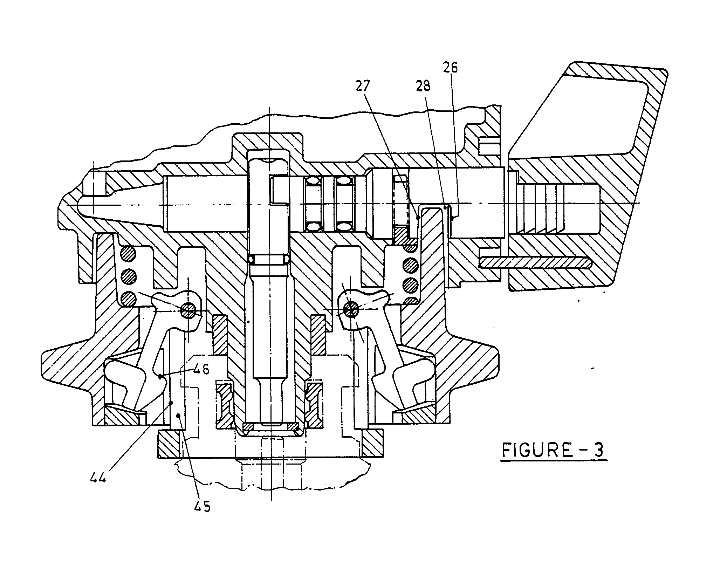

Figure 3 is another sectional view of a gas pressure regulator inlet with interlockable latching means, wherein housing is unlatched by two hooks from discharge spout of the gas cylinder valve, when knob on the shaft is turned to "UNLOCK"/DETACHABLE position, and pointing it downwards wherein the plunger is lifted up to shut "OFF" the gas flow, and allowing the ring-skirt to lift.

The figures show gas pressure regulator inlet having inter-lockable latching means, inter-locked to axial rotation of shaft (17) which operates plunger (15), and wherein auxiliary annular rubber ring (23) is provided in socket (2) of housing (1), for being mechanically coupled or secured and locked to flange (10) of a discharge spout (3) of a known type of self-closing valve with pin (60) protruding out inside discharge spout (3) for being depressed by plunger (15), to release gas under pressure to flow therethrough. The gas pressure regulator inlet comprises essentially a housing (1) with a socket (2) having a self-latching means comprising a pair of hooks (4-5) hinged on socket (2) on toggle principle in diametrically opposed relationship with each other with respective independent pivots (6-7), and kept in position by a ring-skirt (8) around socket (2). The ring-skirt (8) is pressed continuously by a compression coil spring (9) whereby the hooks (4-5) are under pressure, thus forming self-latching means which is normally closed and is always ready to grip the flange (10). Socket (2) under slight pressure is adapted to slide over chamber (11) of flange (10), when hooks (4-5) open out to receive and get enaged into annular groove (12) providing below flange (10). Socket (2) is also having a centrally located inlet stub tube (13) with a stop washer (14) which acts as a guide and stopper for plunger (15). Housing (1) is having a journal bearing bore (16) with its axis radial to that of socket (2) axis. A rotatable shaft (17) is mounted in journal bearing bore (16). Shaft (17) is having eccentric spindle (18) at its inner end which is inserted in groove (19) formed across plunger (15) axis near its inner end, thereby providing a positive linkage therebetween, whereby under axial rotation of shaft (17) by knob (36), plunger (15) is reciprocated inside stub tube (13) to operate pin (60) of self-closing valve in discharge spout (3) of gas cylinder. Plunger (15) is having a concentric groove (20) for 'O' ring seal (21) on its stem. Gas flows under pressure therethrough in "ON" position when plunger (15) is depressed (as shown in Figure 1), and gas flow is shut "OFF" when plunger (15) is retracted (shown in Figure 3). Since the rotation on shaft (17) about its axis gives a reciprocating motion to plunger (15), gas supply is flowing therethrough when 'O' ring seal (21) enters into large diameter of inlet stub tube (13), whereby end of plunger (15) presses down the pin (60) of self-closing valve provided in discharge spout (3) to release gas flow therethrough. The leakage of gas, if any, through rubber joint seal (22) provided by gas cylinder supplier inside discharge spour (3), due to wear and tear coming on the rubber joint seal (22), is prevented by providing additional annular rubber seal (23) within socket (2) and around central inlet stub tube (13), whereby seal (23) gets pressed against top face of flange (10) of discharge spout (3) under latching pressure exerted by hooks (4-5) thus forming self-aligned gas tight and leak proof connection for the discharge outlet (3) of gas cylinder valve. The other end of journal bearing bore (16) is having a gas outlet (24) and a fine wire mesh gauze filter (25) is fitted therewithin to arrest a flame travel therethrough, and filter any dust particles or the like, obstructing smooth flow of gas under pressure therethrough, where gas pressure and its flow is controlled by a known type of diaphragm (not shown), while a non-return valve (not shown) is provided in the case of known high pressure connector (not shown), to shut off return of gas in its dismounted condition from manifold system where such connector is used. The 'O' ring seal (21) on stem of plunger (15) inside inlet stub tube (13) additionally stops gas leakage through non-return valve (not shown) fitted to high pressure gas connector (not shown). In both cases the gas outlet (24) is connected to tubing of gas appliances/apparatus in known manner.

An opening (26) is provided in journal bearing bore (16) near its outer end, and a notch (27) is provided near corresponding outer stem end of shaft (17), so that in "OFF"/"DETACHABLE" position of shaft (17), the opening (26) and notch (27) in shaft (17) coincide forming a gap (28), which allows projection (29) on edge of ring-skirt (8) to get in smoothly and fully without any obstruction, thus interlocked condition for movement of hooks (4-5) is removed making it possible to lift manually the ring-skirt (8) to unlatch socket (2) from discharge spout (3) of gas cylinder valve (as shown in Figure 3).

When shaft (17) is rotated about its axis to 'ON'/'LOCK'/UNDETACHABLE position, the notch (27) rotates away from the opening (26) in journal bearing bore (16), and gap (28) is filled by remaining half-round stem (30) of shaft (17), creating obstruction for projection (29) on ring-skirt (8) to enter into gap (28), thus ring-skirt (8) cannot be manually or accidentally lifted or unseated from its normal position so long as shaft (17) is in 'ON'/'LOCK' position (shown in Figure 1), and the locking of hooks (4-5) are thus inter-locked with gas flow 'ON' position.

The shaft (17) is provided with a pair of spaced concentric grooves (31) fitted with 'O' ring seals (32) to prevent leakage of gas under pressure from housing (1) into atmosphere. The axial movement of shaft (17) is prevented by inserting a wear resistant circlip (33) in another concentric groove (34) in shaft (17) and a recess (35) in housing (1). A knob (36) is fitted at the outer end of shaft (17).

The latching mechanism for gas regulator as hereinbefore described comprises of two hooks (4-5), each having a taper (41) bell mouth at its unpivoted end for easy entry of the flange (10) end of discharge outlet (3). The hooks (4-5) are hinged independently at the respective pivots (6-7) on socket (2) of housing (1). Each hook (4-5) is having a wing (42) at its back and respective wings are pressed, and hooks (4-5) are kept inwardly in normally closed position by a coil spring (9) loaded inside ring-skirt (8) and around socket (2). Each hook (4-5) has both side flaps (43), which rest on sides (44) of windows (45) provided on socket (2) for entry of pawls (46) of hooks (4-5). The Pawls (46) of hooks (4-5) protrude into inner circular face (47) of socket (2) and are always ready to grip firmly the flange (10) on discharge spout (3) of gas cylinder valve. The ring-skirt (8) has two notches (48-49) on its inner diameter to receive two back wings (42) of respective hooks (4-5). The ring-skirt (8), with two wings (42) of hooks (4-5) fully in, is then turned about its axis whereby wings (42) enter into side pocket (50-51) having partial covers (52-53) from top. The covers (52-53) do not allow ring-skirt (8) to come out of socket (2), but continuously press the wings (42) of both hooks (4-5) since the ring-skirt (8) itself is under pressure of compression coil spring (9). When ring-skirt (8) is lifted or unseated manually to un-latch the regulator from discharge outlet (3) in 'UNLOCK'/DETACHABLE position of the knob (36), the inner top edge (56) of ring-skirt (8) pushes up the fins (54-55) after initial idle travel, which move outwardly pawls (46) of respective hooks (4-5) to open and release their grip on flange (10) of discharge spout (3). Suitably clamped two inserts (57-58) fill gaps between notches (48-49) and side pockets (50-51) in ring-skirt (8) from the other side (59) resulting in smooth sliding of ring-skirt (8) on the socket (2).

The self-latching inter-lockable means herein described and illustrated in the accompanying drawings may form an integral part of gas flow regulator intended for mounting directly on discharge spout of L. P. gas cylinder or the like, or it may also form a separate gadget like a quick action adaptor for coupling or connecting it to a source of gas storing cylinder or gas consuming device or appliance which may not be liquefied petroleum gas cylinder or the like.

While we have described and claimed a particular embodiment of our present invention we do not wish to limit ourselves to the exact form shown which is intended to illustrate the invention rather than to limit it. It is to be expressly understood that the invention is suceptible to such changes and modifications which shall define no material departure from the salient features of the invention herein described, illustrated in the accompanying drawings and claimed in the appended claims.

## Claims

(1) A gas pressure regulator with an interlockable latching means comprising a housing (1) having a socket (2) with two hooks (4-5) pressed continuously by a ring-skirt (8) having a compression coil spring (9) within it and mounted around the socket (2) for the latching automatically when adapted to couple mechanically to a flange (10) of discharge spout (3) of self-closing valve and to get inter-locked with gas flow controlling rotary shaft (17) provided on the housing (1), while the ring-skirt (8) adapted to un-seat for pushing the hooks (4-5) outwards to un-latch the flange (10).

(2) A gas pressure regulator with an interlockable latching means as claimed in Claim 1 wherein two hooks (4/5) are independently pivotted in diametrical opposition to each other on the socket (2) by pivots (6-7) respectively on toggle principle, where each hook has taper bell mouth (41), side fins (54-55) and side flaps (43) resting against respective sides (44) of windows (45) on the socket (2), for entry of pawls (45) of the hooks (4-5) which protrude at inner circle faces (47) of socket (2).

(3) A gas pressure regulator with an inter- , lockable latching means as claimed in either of Claims 1 and 2 wherein latching means and gas flow controlling shaft (17) are independently rotatable and inter-lockable with each other in desired sequence.

(4) A gas pressure regulator with inter-lockable latching means as claimed in any of Claims 1 to 3 wherein only one rotary position of the shaft (17), an opening (26) in the journal bearing bore (16) and a notch (27) on the shaft (17) coincides, forming a gap (28) for full entry of projection (29) of the ring-skirt (8), while in other rotary positions of the shaft (17), the notch (27) rotates away from the opening (26), and the gap (28) gets filled by remaining half-round solid stem (30) of shaft (17), creating obstruction for entry of the projection (29) into the gap (28).

(5) A gas pressure regulator with an inter-lockable latching means as claimed in any of Claims 1 to 4 wherein the ring-skirt (8) has two notches (48-49) in its inner diameter to receive two back wings (42) of respective hooks (4-5), and to lock them; when the ring-skirt (8) made to rotate about its axis whereby two wings (42) enter into side pockets (50-51) leaving gaps between them which are filled and suitably clamped by two insets (57-58).

(6) A gas pressure regulator with inter-lockable latching means as claimed in any of Claims 1 to 5 wherein an auxiliary rubber-ring (23) is provided around central inlet stub tube (13) in socket (2), which remains pressed against flange (10) top face of discharge spout (3) under latching pressure exerted by hooks (4-5) from bottom of flange (10), to self-align itself and to provide additional rubber seal.

(7) A gas pressure regulator with inter-lockable latching means as claimed in any of Claims 1 to 6 wherein an eccentric spindle (18) on shaft (17) at its inner end engages into a groove (19) across axis of a plunger (15) making positive linkage between them to reciprocate the plunger (15) inside the inlet stub tube (13) to actuate a pin (6) of the self-closing valve, the plunger (15) being provided with 'O' ring (21) seal to stop entry of gas under pressure into regulator in desired knob (36) rotary position.

(8) A gas pressure regulator with inter-lockable latching means as claimed in any of claims 1 to 7 wherein the knob (36) on shaft is (17) rotatable in either direction for making gas flow "ON" to "OFF" and vice a versa and to have maximum plunger (15) movement.

EP 0 296 282 A1

FIGURE-1

FIGURE-2

FIGURE - 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 063 957 (J. MARIE) <br> * Figures 1,3,4 * | 1,2,8 | F 16 L 37/28 <br> F 17 C 13/04 |
| A | | 4,6,7 | |
| A | FR-A-2 058 488 (J. MARIE) <br> * Figure 4 * | 1,3,7,8 | |
| A,D | GB-A-1 214 029 (A/S TEKNOVA) | | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 03-02-1988 | BARTSCH A.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)